# EUROPEAN PATENT APPLICATION

(11) **EP 4 647 868 A1**
(43) Date of publication of application: **12.11.2025**
(21) Application number: 23914479.3
(22) Date of filing: 14.12.2023
(51) Int. Cl.: G05D 105/10, G05D 1/60

(54) **METHOD AND APPARATUS FOR CAUSING DEVICE TO ADVANCE TO DESIGNATED LOCATION, AND SELF-MOVING DEVICE**

(30) Priority: 03.01.2023 CN 202310003113
(71) Applicant: Beijing Roborock Innovation Technology Co., Ltd., Beijing 102206 (CN)
(72) Inventor: ZHANG, Lei, Beijing 102206 (CN)
(74) Representative: Haseltine Lake Kempner LLP
(86) International application number: PCT/CN2023/138641
(87) International publication number: WO 2024/146345

(57) **Abstract**

A method and apparatus for causing a device to advance to a designated location, and a self-moving device. The method comprises: when it is detected that a designated location is in an unreachable state, scanning a target location, so as to obtain a scanning result (101); and if the scanning result indicates that the designated location is currently in a reachable state, continuing to advance to the designated location (102).

## Description

The present application claims priority to Chinese Patent Application No. 202310003113.6, filed with the China National Intellectual Property Administration on January 3, 2023, and entitled "METHOD AND APPARATUS FOR ENABLING DEVICE TO MOVE TO DESIGNATED POSITION, AND SELF-MOBILE DEVICE", which is incorporated herein by reference in its entirety.

### TECHNICAL FIELD

The present application relates to the field of device control technologies, and in particular, to a method and apparatus for enabling a device to move to a designated position, and a self-mobile device.

### BACKGROUND

A self-mobile device, for example, a self-propelled sweeping device, a self-propelled mopping device, and a self-propelled window-cleaning device, is a type of device that can automatically move with the control of a program. When performing walking or cleaning tasks, a self-mobile device needs to move from the current position to the destination where the task is to be performed.

In the related art, a self-mobile device needs to rely on historical map information for path planning. However, in the case where the actual circumstance in the map changes, for example, when a user casually closes a room door, the path planned by the self-mobile device based on a historical map can no longer be passed smoothly, resulting in an error in the self-mobile device. Even if the destination is reachable again due to a subsequent change of environment information, the self-mobile device in an error state cannot respond in a timely manner. Therefore, how to enable the self-mobile device in the error state to respond to the environmental change in a timely manner and continue to move and perform the task has become an urgent problem to be solved.

### SUMMARY

In view of this, the present application provides a method and apparatus for enabling a device to move to a designated position, and a self-mobile device, with the main purpose of solving the issue of how to enable a self-mobile device in an error state to respond to an environmental change in a timely manner and continue to perform a task.

According to a first aspect of the present application, a method for enabling a device to move to a designated position is provided. The method includes:
scanning a target position to acquire a scanning result when it is detected that a designated position is in an unreachable state; and
continuing to move to the designated position if the scanning result indicates that the designated position is currently in a reachable state.

In some embodiments, detecting that the designated position is in the unreachable state includes: detecting that the designated position is in the unreachable state based on a historical map.

In some embodiments, detecting that the designated position is in the unreachable state based on the historical map includes:
determining a target path based on a current device position and the designated position, and identifying the historical map based on the target path; and
determining that the designated position is in the unreachable state when it is identified that a target environment is in a closed state.

In some embodiments, scanning the target position to acquire the scanning result includes: performing a preliminary scanning detection on the target position through actual detection, and generating a scanning result indicating that the designated position is currently in the reachable state if it is detected that the target position is traversable, where the reachable state is used to indicate that the target position is passable, or a path to reach the designated position can be generated after updating the historical map.

In some embodiments, scanning the target position to acquire the scanning result includes: performing a preliminary scanning detection on the target position through actual detection, and generating a scanning result indicating that the designated position is currently in the unreachable state if it is detected that the target position is non-traversable.

In some embodiments, following the scanning result indicating that the designated position is currently in the unreachable state, the method further includes: sending prompt information to a remote application terminal; and scanning the target position again in response to a resume movement instruction and acquiring a scanning result again.

In some embodiments, scanning the target position to acquire the scanning result when it is detected that the designated position is in the unreachable state further includes:
determining, through actual detection, that the designated position is in the unreachable state;
determining the target position in response to a resume movement instruction and scanning the target position; and
generating a scanning result indicating that the designated position is currently in the reachable state if it is detected that the target position is traversable; or
generating a scanning result indicating that the designated position is currently in the unreachable state if it is detected that the target position is non-traversable.

In some embodiments, determining, through actual detection, that the designated position is in the unreachable state includes:
scanning an operating environment associated with a current device position by using a scanning sensor; and
generating a preliminary scanning result indicating that the designated position is currently in the unreachable state when it is detected by scanning that the operating environment is in a closed state, and sending prompt information to a remote application terminal.

In some embodiments, scanning the target position includes:
scanning the target position by using a laser scanning sensor; and
determining that the target position is traversable if it is detected that there is no obstacle at the target position; or
acquiring a current obstacle point cloud of the target position if it is detected that there is an obstacle at the target position, and determining that the target position is traversable when the proportion of the obstacle point cloud within the unit space or area is less than a first preset threshold.

In some embodiments, scanning the target position further includes:
scanning the target position by using an obstacle perception sensor; and
determining that the target position is traversable if it is detected that there is no obstacle at the target position; or
acquiring a current obstacle height point cloud and obstacle position point cloud of the target position if it is detected that there is an obstacle at the target position, and determining that the target position is traversable when the proportion of the obstacle height point cloud and the proportion of the obstacle position point cloud within the unit space or area are less than a second preset threshold and a third preset threshold, respectively.

In some embodiments, after acquiring the scanning result, the method further includes:
continuing to send the prompt information to a remote application terminal or entering an explore mode if the scanning result indicates that the designated position is currently in the unreachable state.

In some embodiments, entering the explore mode includes:
moving to the target position;
rotating in a designated direction when a physical collision buffer is triggered, wherein the designated direction is a direction opposite a position at which the physical collision buffer is triggered;
moving in the designated direction until the target position is passed or there is no forward path; and
sending the prompt information to the remote application terminal if there is no forward path.

In some embodiments, before scanning the target position when it is detected that the designated position is in the unreachable state, the method further includes:
scanning an operating environment by using a scanning sensor, generating an electronic map, and storing the electronic map in a local memory or a remote server; and
receiving a task instruction and reading the designated position to be reached as required in the task instruction; or
planning a task list based on the task instruction, and sequentially setting positions associated with each of a plurality of subtasks in the task list as the designated position according to an execution order of the plurality of subtasks.

According to a second aspect of the present application, an apparatus for enabling a device to move to a designated position is provided. The apparatus includes:
a scanning module, configured to scan a target position to acquire a scanning result when it is detected that a designated position is in an unreachable state; and
a moving module, configured to continue to move to the designated position if the scanning result indicates that the designated position is currently in a reachable state.

In some embodiments, the scanning module is configured to detect that the designated position is in the unreachable state based on a historical map.

In some embodiments, the scanning module is configured to: determine a target path based on a current device position and the designated position and identify the historical map based on the target path; and determine that the designated position is in the unreachable state if it is identified that a target environment is in a closed state.

In some embodiments, the scanning module is configured to: perform a preliminary scanning detection on the target position through actual detection, and generate a scanning result indicating that the designated position is currently in the reachable state if it is detected that the target position is traversable, where the reachable state is used to indicate that the target position is passable, or a path to reach the designated position can be generated after updating the historical map.

In some embodiments, the scanning module is configured to: perform a preliminary scanning detection on the target position through actual detection, and generate a scanning result indicating that the designated position is currently in the unreachable state if it is detected that the target position is non-traversable.

In some embodiments, the scanning module is further configured to: send prompt information to a remote application terminal; and scan the target position again in response to a resume movement instruction and acquire a scanning result again.

In some embodiments, the scanning module is further configured to: determine, through actual detection, that the designated position is in the unreachable state; determine the target position in response to a resume movement instruction and scan the target position; and generate a scanning result indicating that the designated position is currently in the reachable state if it is detected that the target position is traversable; or generate a scanning result indicating that the designated position is currently in the unreachable state if it is detected that the target position is non-traversable.

In some embodiments, the scanning module is further configured to: scan an operating environment associated with a current device position by using a scanning sensor; and generate a preliminary scanning result indicating that the designated position is currently in the unreachable state if it is detected by scanning that the operating environment is in a closed state, and send prompt information to a remote application terminal.

In some embodiments, the scanning module is configured to: scan the target position by using a laser scanning sensor; and determine that the target position is traversable if it is detected that there is no obstacle at the target position; or acquire a current obstacle point cloud of the target position if it is detected that there is an obstacle at the target position, and determine that the target position is traversable when the proportion of the obstacle point cloud within the unit space or area is less than a first preset threshold.

In some embodiments, the scanning module is further configured to: scan the target position by using an obstacle perception sensor; and determine that the target position is traversable if it is detected that there is no obstacle at the target position; or acquire a current obstacle height point cloud and obstacle position point cloud of the target position if it is detected that there is an obstacle at the target position, and determine that the target position is traversable when the proportion of the obstacle height point cloud and the proportion of the obstacle position point cloud within the unit space or area are less than a second preset threshold and a third preset threshold, respectively.

In some embodiments, the apparatus further includes:
a sending module, configured to continue to send the prompt information to a remote application terminal or enter an explore mode if the scanning result indicates that the designated position is currently in the unreachable state.

In some embodiments, the sending module is configured to: move to the target position; rotate in a designated direction when a physical collision buffer is triggered, where the designated direction is a direction opposite the position at which the physical collision buffer is triggered; move in the designated direction until the target position is passed or there is no forward path; and send the prompt information to the remote application terminal if there is no forward path.

In some embodiments, the apparatus further includes:
a generation module, configured to: scan an operating environment by using a scanning sensor, generate an electronic map, and store the electronic map in a local memory or a remote server; and
an acquisition module, configured to: receive a task instruction and read the designated position to be reached as required in the task instruction; or plan a task list based on the task instruction, and sequentially set positions associated with each of a plurality of subtasks in the task list as the designated position according to the execution order of the plurality of subtasks.

According to a third aspect of the present application, a computer device is provided. The computer device includes a memory and a processor. The memory stores a computer program, and the processor, when running the computer program, is caused to implement the steps of any one of the methods described in the first aspect above.

According to a fourth aspect of the present application, a computer-readable storage medium storing a computer program is provided. The computer program, when run by a processor, causes the processor to implement the steps of any one of the methods described in the first aspect above.

By means of the above technical solutions, the present application provides a method and apparatus for enabling a device to move to a designated position, and a self-mobile device. According to the present application, when the self-mobile device detects that the designated position is in the unreachable state, prompt information for resuming the reachable state of the designated position is sent to the remote application terminal. Then, the self-mobile device scans the target position in response to the resume movement instruction to acquire the scanning result. Movement toward the designated position continues if the scanning result indicates that the designated position is currently in the reachable state. By using the resume movement instruction, the self-mobile device is allowed to resume the moving state and re-scan the target position to update the environment information. Subsequently, upon detecting that the designated position is in the reachable state, the self-mobile device continues to move toward the task location.

The above descriptions are merely an overview of the technical solutions of the present application, provided to enable a clearer understanding of the technical means of the present application and to facilitate implementation according to the content of the specification. Furthermore, to make the above and other objectives, features, and advantages of the present application more evident and comprehensible, specific embodiments of the present application are exemplified below.

### BRIEF DESCRIPTION OF THE DRAWINGS

By reading the detailed description of preferred embodiments below, various additional advantages and benefits will become clear to those of ordinary skill in the art. The drawings are provided solely for the purpose of illustrating the preferred embodiments and are not to be construed as limiting the scope of the present application. In addition, the same components are denoted by the same reference numerals throughout the drawings. In the drawings:
FIG. 1 illustrates a schematic flowchart of a method for enabling a device to move to a designated position according to an embodiment of the present application;
FIG. 2 illustrates a schematic flowchart of a method for enabling a device to move to a designated position according to an embodiment of the present application;
FIG. 3 illustrates a schematic structural diagram of an apparatus for enabling a device to move to a designated position according to an embodiment of the present application;
FIG. 4 illustrates a schematic structural diagram of an apparatus for enabling a device to move to a designated position according to an embodiment of the present application;
FIG. 5 illustrates a schematic structural diagram of an apparatus for enabling a device to move to a designated position according to an embodiment of the present application; and
FIG. 6 illustrates a schematic diagram of an apparatus structure of a computer device according to an embodiment of the present application.

### DETAILED DESCRIPTION

Exemplary embodiments of the present application will be described in more detail below with reference to the drawings. While the exemplary embodiments of the present application are shown in the drawings, it should be understood that the present application may be embodied in various forms and should not be limited to the embodiments set forth herein. Rather, these embodiments are provided such that the present application will be thoroughly understood, and will fully convey the scope of the present application to those skilled in the art.

A self-mobile device, for example, a self-propelled sweeping device, a self-propelled mopping device, and a self-propelled window-cleaning device, is a type of device that can automatically move with the control of a program. When performing walking or cleaning tasks, a self-mobile device needs to move from the current position to the destination where the task is to be performed. At present, a self-mobile device needs to rely on historical map information for path planning. However, in the case where the actual circumstance in the map changes, for example, when a user casually closes a room door, the path planned by the self-mobile device based on a historical map can no longer be passed smoothly, resulting in an error in the self-mobile device. Even if the destination is reachable again due to a subsequent change of environment information, the self-mobile device in an error state cannot respond in a timely manner. Therefore, how to enable the self-mobile device in the error state to respond to the environmental change in a timely manner and continue to move and perform the task has become an urgent problem to be solved. Therefore, the present application provides a method for enabling a device to move to a designated position, in which, when the self-mobile device detects that the designated position is in the unreachable state, the prompt information for resuming the reachable state of the designated position is sent to the remote application terminal. Then, the self-mobile device scans the target position in response to the resume movement instruction to acquire the scanning result. Movement toward the designated position continues if the scanning result indicates that the designated position is currently in the reachable state. By using the resume movement instruction, the self-mobile device is allowed to resume the moving state and re-scan the target position to update the environment information. Subsequently, upon detecting that the designated position is in the reachable state, the self-mobile device continues to move toward the task location.

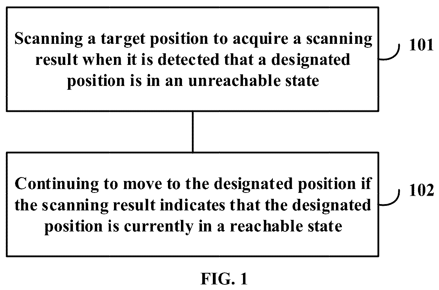

The embodiments of the present application provide a method for enabling a device to move to a designated position. As shown in FIG. 1, the method includes the following steps.

In 101, a target position is scanned to acquire a scanning result when it is detected that a designated position is in an unreachable state.

During actual operation, a user will issue a task instruction for the current session before the self-mobile device moves, and the instruction carries the designated position to which the device needs to move this time. For example, in an issued instruction for going to clean a "living room", the "living room" is the designated position, and the self-mobile device moves to the designated position, that is, the living room, for cleaning. Alternatively, the position that needs to be reached may not be directly indicated in the task instruction. For example, if the issued instruction is "whole house cleaning", a robot may autonomously plan an order for cleaning each specific room during the execution of the instruction, or the robot may choose to clean the rooms one by one according to the proximity principle. In this process, each room or a specific site that needs to be reached is considered the designated position. Clearly, in one cleaning or moving task, there may be more than one designated position that may appear for a plurality of times as the task is performed. Before the self-mobile device moves, a control system plans a path to the designated position. Further, the control system of the self-mobile device may detect, before the self-mobile device moves, whether all environments associated with a current path are in a reachable and connected state, and enable a scanning sensor to scan the surrounding road conditions during the movement, thereby detecting the road conditions of the target path in real time. Once a target obstacle is found on the target path or the current environment is detected to be in a closed state, prompt information is immediately sent to an application terminal as an alert, notifying a user to remove the target obstacle or open the closed access. In some embodiments, the alert issued to the application terminal may further include an instruction for prompting the user to send a target instruction to the self-mobile device to control the self-mobile device to continue the movement after the target obstacle is removed. In some embodiments, the target obstacle is one that is sufficient to hinder the self-mobile device from reaching the designated position along the target path. Further, when the control system of the self-mobile device receives the resume movement instruction initiated by the user, it indicates that the user already knows that there is a target obstacle or an obstruction at the target position, and in this case, the control system resumes the moving state of the self-mobile device. It should be noted that the user-initiated target instruction may indicate that the obstruction of the target position has already been cleared or the target obstacle at the target position has been removed. However, it is also possible that such removal has not occurred. For example, the user may believe that the self-mobile device can pass through the target position by itself. Therefore, to prevent the self-mobile device from being stuck at the target position, the control system uses the scanning sensor to scan the target position again. Whether the target position is passable is determined based on the acquired scanning result. In some embodiments, the self-mobile device may further update the historical electronic map in a local memory based on the acquired scanning result.

In 102, if the scanning result indicates that the designated position is currently in a reachable state, the movement toward the designated position continues.

In the embodiments of the present application, if the scanning result shows that there is no object at the target position or that an object at the target position does not hinder the self-mobile device from passing through the target position, it indicates that the target position is passable, that is, the designated position is currently in the reachable state. In this case, the control system can continue to control the self-mobile device to proceed towards the designated position according to the resume movement instruction. In the entire movement process, the control system scans the surrounding road conditions in real time by using the scanning sensor, thereby detecting the road conditions along the target path until the designated position is reached.

According to the method provided in the embodiments of the present application, when the self-mobile device detects that the designated position is in the unreachable state, the prompt information for resuming the reachable state of the designated position is sent to the remote application terminal. Then, the self-mobile device scans the target position in response to the resume movement instruction to acquire the scanning result. Movement toward the designated position continues if the scanning result indicates that the designated position is currently in the reachable state. By using the resume movement instruction, the self-mobile device is allowed to resume the moving state and re-scan the target position to update the environment information. Subsequently, upon detecting that the designated position is in the reachable state, the self-mobile device continues to move toward the task location.

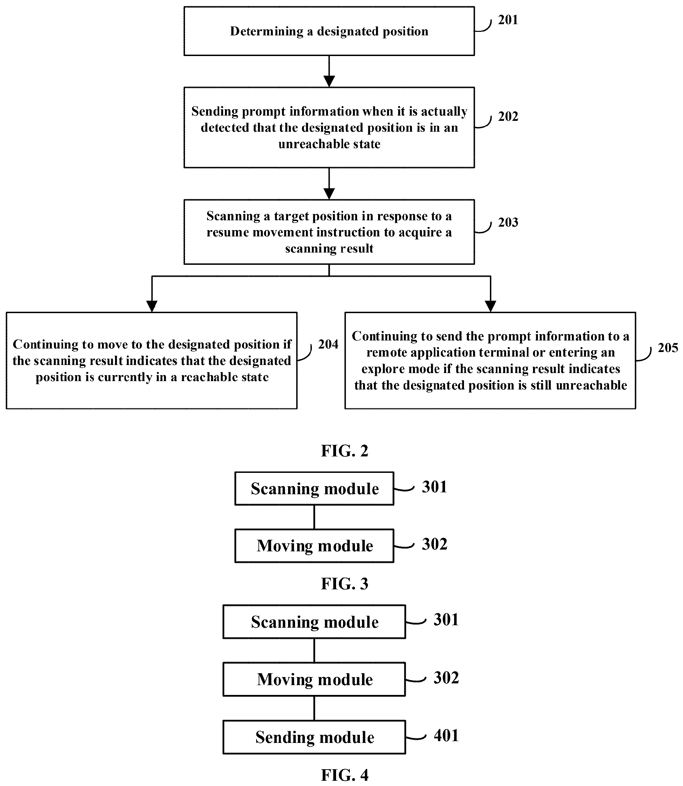

The embodiments of the present application provide a method for enabling a device to move to a designated position. As shown in FIG. 2, the method includes the following steps.

In 201, a designated position is determined.

During actual operation, a user may issue a task instruction for the current session before a self-mobile device moves, and a control system can generate a designated position according to the task instruction. It should be noted that when the self-mobile device starts operating for the first time, the local memory of the self-mobile device does not store an electronic map related to the current operating environment. Therefore, as the self-mobile device operates for the first time, the control system uses a scanning sensor to scan the environment in each room, generates the electronic map based on the scanning result, and stores the electronic map in the local memory or a remote server. For example, environment information related to a kitchen, a living room, a bedroom A, a bedroom B, and a toilet is determined based on the scanning result. With the living room as an example, the control system will scan and determine the positions of a sofa, a trash can, and a tea table as the environment information. After the self-mobile device grasps the environment information, the user may send the task instruction to the self-mobile device via an application terminal. The control system receives the task instruction and generates the designated position based on the task information carried in the task instruction. In some embodiments, the task information may directly show the designated position. In this case, the required designated position to be reached may be directly read from the task instruction. For example, in an issued instruction for going to clean a "living room", the "living room" is the designated position, and the self-mobile device moves to the designated position, that is, the living room, for cleaning. Alternatively, the position that needs to be reached may not be directly indicated in the task instruction. In this case, the control system plans a task list based on the task instruction and sequentially sets the positions associated with each of a plurality of subtasks in the task list as the designated position according to the execution order of the plurality of subtasks. For example, if the issued instruction is "whole house cleaning", a robot may autonomously plan an order for cleaning each specific room during the execution of the instruction, or the robot may choose to clean the rooms one by one according to the proximity principle. In this process, the rooms or specific sites that need to be reached are sequentially considered as the designated position. Clearly, in one cleaning or moving task, there may be more than one designated position that may appear for a plurality of times as the task is performed.

Further, the self-mobile device needs to plan a target path to the designated position. Specifically, if the self-mobile device has performed the task of moving from the current device position to the designated position, the control system may search for the historical path based on the current device position and the designated position, then use the historical path as the target path to the designated position this time, and scan the road conditions along the target path during the movement. If the self-mobile device has not performed the task of moving from the current device position to the designated position, the control system may continuously plan a route that takes relatively short time or has a relatively short length as the target path during the movement, to quickly and safely reach the target position designated by the user and scan to detect the road conditions along the target path.

In 202, prompt information is sent when it is actually detected that the designated position is in an unreachable state.

In the embodiments of the present application, the control system, upon actually detecting that the designated position is in an unreachable state, immediately sends the prompt information to an application terminal to give an alert, enabling the designated position to resume a reachable state through the prompt information.

During actual application, there are two cases where the control system detects that the designated position is in the unreachable state. In one case, virtual detection is performed based on a historical map. For example, the user may have already interconnected all the environments associated with the target path (for example, all room doors are opened), but since the historical electronic map is not updated, the control system detects that the target environment in a closed state, and the designated position in the task is in an unreachable state. In this case, the control system controls the self-mobile device to move to the vicinity of the target position to actually detect the target position, and when it is actually detected that the target position can be reached, the self-mobile device continues to move to the designated position. When it is actually detected that the target position is non-traversable, the prompt information is sent to the remote application terminal to give an alert. The target position is detected again until a resume movement instruction is received. In this detection, if it is detected that the target position is traversable, the device continues to move to the designated position. If it is detected that the target position is non-traversable, the prompt information continues to be sent to the remote application terminal to give an alert. The closed state is used to indicate that there is no target position in the target environment that is connected to other environments; that is, the target position in this case is an access position, for example, a door. In addition, the historical map may be drawn or updated during the current task or may be drawn or updated during a previous task. For example, a sweeper has been to room A for sweeping for the first time, but the door of room A is closed when the sweeper goes to sweep for the second time. Therefore, the robot updates the map to indicate that room A is closed. Later, the user requests the robot to clean room A, and the door of room A is already open by the user. However, since the historical electronic map is not updated, the self-mobile device considers that no further movement can be made and sends the prompt information to the remote application terminal to give an alert.

In the other case, it may be that the historical electronic map shows that all the environments associated with the target path are passable, but in fact, the user has placed a target obstacle at the target position on the target path that is sufficient to hinder the self-mobile device from reaching the designated position along the target path, or has closed one or more target positions, resulting in a closed state of the environment associated with the target path. Consequently, the self-mobile device scans and detects that no further movement can be made and sends the prompt information to the remote application terminal to give an alert. For example, when a sweeper moves into a small room for cleaning, and the user closes the door of the room, after the sweeper finishes cleaning the room, the sweeper performs self-planning based on the whole-house cleaning or selected-region cleaning instruction or follows a specific order in the instruction, and needs to proceed to clean a region outside the room, or needs to go outside the room to return to the base station for charging after the cleaning task is completed. However, the sweeper cannot get out of the room to continue cleaning the space outside the room because the door is closed, and therefore stops moving and sends the prompt information to the remote application terminal to give an alert. Meanwhile, the control system may also update the local electronic map, updating the room to a closed state in the electronic map. It should be noted that the prompt information includes the information about the target position for the user to view and/or the information for assisting in removing the target obstacle.

Further, after receiving an error, the user may manually open the room door and send a target instruction to instruct the robot to continue cleaning. It should be noted that the type of the target obstacle that hinders the movement of the self-mobile device includes an LDS obstacle and a line laser low obstacle. The type of the obstacle depends on the type and the purpose of the sensor that detects the obstacle. For example, an obstacle detected by an LDS is an obstacle with a height of about 8 cm, and an obstacle detected by a line laser is an obstacle with a height ranging from 3 cm to 10 cm.

It should be noted that in the entire process in which the self-mobile device moves from a start point to the designated position, once the designated position is detected to be unreachable, the self-mobile device needs to move to the vicinity of the corresponding target position, to identify the target position, thereby determining whether the prompt information needs to be sent to the remote application terminal. The device continues to move if there is no need, or sends the prompt information if it is needed, waits to receive the resume movement instruction, detects the target position again in response to the resume movement instruction, and determines whether the prompt information needs to be further sent.

In 203, the target position is scanned in response to the resume movement instruction to acquire a scanning result.

In the embodiments of the present application, when the control system of the self-mobile device receives the resume movement instruction initiated by the user, it indicates that the user already knows that there is a target obstacle or an obstruction at the target position, and in this case, the control system resumes the moving state of the self-mobile device. It should be noted that the user-initiated target instruction may indicate that the obstruction of the target position has already been cleared or the target obstacle at the target position has been removed. However, it is also possible that such removal has not occurred. For example, the user may believe that the self-mobile device can pass through the target position by itself. Therefore, to prevent the self-mobile device from being stuck at the target position, the control system uses the scanning sensor to scan the target position again. Whether the target position is passable is determined based on the acquired scanning result. In some embodiments, the self-mobile device may further update the historical electronic map in a local memory based on the acquired scanning result.

Specifically, the self-mobile device may use a laser scanning sensor or an obstacle perception sensor. For the laser scanning sensor, such as an LDS sensor, the self-mobile device rotates by a target angle in place and then observes whether the target position is passable by using the laser scanning sensor. It should be noted that the target angle depends on the angle at which the LDS protective cover support blocks the LDS observation. For the laser scanning sensor, if the laser scanning sensor detects that there is no obstacle at the target position, it may indicate that the user has cleared the target position, such as opening a door, or that the user has removed an obstacle, such as removing furniture. In this case, a scanning result indicating that the designated position is currently in a reachable state may be generated, and then movement toward the designated position continues. If the laser scanning sensor detects that there is an obstacle at the target position, the current obstacle point cloud corresponding to the target position is further acquired. When the proportion of the obstacle point cloud within a unit space or area is less than a first preset threshold, it is considered that the corresponding obstacle has been removed; a scanning result indicating that the designated position is currently in the reachable state may also be generated, and then movement toward the designated position continues. For the obstacle perception sensor, such as a line laser or a 3d TOF sensor, the machine is moved to a position for observation at which the target position can be effectively observed. If the obstacle perception sensor detects that there is no obstacle at the target position, a scanning result indicating that the designated position is currently in the reachable state may be generated, and then movement toward the designated position continues. If the obstacle perception sensor detects that there is an obstacle at the target position, the current obstacle height point cloud and obstacle position point cloud corresponding to the target position are acquired. When the proportion of the obstacle height point cloud and the proportion of the obstacle position point cloud are less than a second preset threshold and a third preset threshold, respectively, it is considered that the target position is passable; a scanning result indicating that the designated position is currently in the reachable state may be generated, and then movement toward the designated position continues.

In 204, movement toward the designated position continues if the scanning result indicates that the designated position is currently in the reachable state.

In the embodiments of the present application, if the scanning result shows that there is no object at the target position or that an object at the target position does not hinder the self-mobile device from passing through the target position, it indicates that the target position is passable, that is, the designated position is currently in the reachable state. In this case, the control system can continue to control the self-mobile device to proceed towards the designated position according to the resume movement instruction. In the entire movement process, the control system scans the surrounding road conditions in real time by using the scanning sensor, thereby detecting the road conditions along the target path until the designated position is reached.

In 205, the prompt information continues to be sent to the remote application terminal, or an explore mode is entered if the scanning result indicates that the designated position is still unreachable.

In the embodiments of the present application, if the scanning result indicates that there is an obstacle at the target position, a stopped state is maintained, and the prompt information continues to be sent to the remote application terminal to give an alert.

Further, if the user does not respond for a long time or the user has enabled the obstacle explore mode, the control system controls the self-mobile device to explore and pass through the target position based on a physical collision buffer. Specifically, the duration of the alert after the prompt information starts being sent is counted (the prompt information may be continuously sent, or may be sent one or more times). When the duration of the alert is equal to a preset alert duration or when an instruction for enabling the obstacle explore mode is detected, the sending of the prompt information stops, and movement proceeds toward the target position. During the movement, the physical collision buffer is used to detect the road condition. If the physical collision buffer is triggered, the self-mobile device is controlled to rotate in a designated direction and then move in the designated direction. The designated direction is the direction opposite the position at which the physical collision buffer is triggered. The movement of the self-mobile device is continuously controlled based on the triggering situation of the physical collision buffer until the target position is passed or there is no forward path ahead. It should be noted that if it is found through the exploration that there is no forward path, the prompt information continues to be sent or is sent again to the remote application terminal.

According to the method provided in the embodiments of the present application, when the self-mobile device detects that the designated position is in the unreachable state, the prompt information for resuming the reachable state of the designated position is sent to the remote application terminal. Then, the self-mobile device scans the target position in response to the resume movement instruction to acquire the scanning result. Movement toward the designated position continues if the scanning result indicates that the designated position is currently in the reachable state. By using the resume movement instruction, the self-mobile device is allowed to resume the moving state and re-scan the target position to update the environment information. Subsequently, upon detecting that the designated position is in the reachable state, the self-mobile device continues to move toward the task location.

Further, as the specific implementation of the method in FIG. 1, the embodiments of the present application provide an apparatus for enabling a device to move to a designated position. As shown in FIG. 3, the apparatus includes a scanning module 301 and a moving module 302.

The scanning module 301 is configured to scan a target position to acquire a scanning result when it is detected that the designated position is in an unreachable state.

The moving module 302 is configured to continue to move to the designated position if the scanning result indicates that the designated position is currently in a reachable state.

In a specific application scenario, the scanning module 301 is configured to detect that the designated position is in the unreachable state based on a historical map.

In a specific application scenario, the scanning module 301 is configured to: determine a target path based on a current device position and the designated position and identify the historical map based on the target path; and determine that the designated position is in the unreachable state when it is identified that a target environment is in a closed state.

In a specific application scenario, the scanning module 301 is configured to: perform a preliminary scanning detection on the target position through actual detection, and generate the scanning result indicating that the designated position is currently in the reachable state if it is detected that the target position is traversable. The reachable state is used to indicate that the target position is passable, or a path to reach the designated position can be generated after updating the historical map.

In a specific application scenario, the scanning module 301 is configured to: perform a preliminary scanning detection on the target position through actual detection, and generate a scanning result indicating that the designated position is currently in the unreachable state if it is detected that the target position is non-traversable.

In a specific application scenario, the scanning module 301 is further configured to: send prompt information to a remote application terminal; and scan the target position again in response to a resume movement instruction and acquire a scanning result again.

In a specific application scenario, the scanning module 301 is further configured to: determine, through actual detection, that the designated position is in the unreachable state; determine the target position in response to a resume movement instruction and scan the target position; and generate a scanning result indicating that the designated position is currently in the reachable state if it is detected that the target position is traversable; or generate a scanning result indicating that the designated position is currently in the unreachable state if it is detected that the target position is non-traversable.

In a specific application scenario, the scanning module 301 is further configured to: scan an operating environment associated with the current device position by using a scanning sensor; and generate a preliminary scanning result indicating that the designated position is currently in the unreachable state if it is detected by scanning that the operating environment is in a closed state, and send prompt information to a remote application terminal.

In a specific application scenario, the scanning module 301 is configured to: scan the target position by using a laser scanning sensor; and determine that the target position is traversable if it is detected that there is no obstacle at the target position; or acquire a current obstacle point cloud of the target position if it is detected that there is an obstacle at the target position, and determine that the target position is traversable when the proportion of the obstacle point cloud within the unit space or area is less than a first preset threshold.

In a specific application scenario, the scanning module 301 is further configured to: scan the target position by using an obstacle perception sensor; and determine that the target position is traversable if it is detected that there is no obstacle at the target position; or acquire a current obstacle height point cloud and obstacle position point cloud of the target position if it is detected that there is an obstacle at the target position, and determine that the target position is traversable when the proportion of the obstacle height point cloud and the proportion of the obstacle position point cloud within the unit space or area are less than a second preset threshold and a third preset threshold, respectively.

In a specific application scenario, as shown in FIG. 4, the apparatus further includes a sending module 401.

The sending module 401 is configured to continue to send the prompt information to the remote application terminal or enter an explore mode if the scanning result indicates that the designated position is currently in the unreachable state.

In a specific application scenario, the sending module 401 is configured to: move to the target position; rotate in a designated direction when a physical collision buffer is triggered, where the designated direction is a direction opposite the position at which the physical collision buffer is triggered; move in the designated direction until the target position is passed or there is no forward path; or send the prompt information to the remote application terminal if there is no forward path.

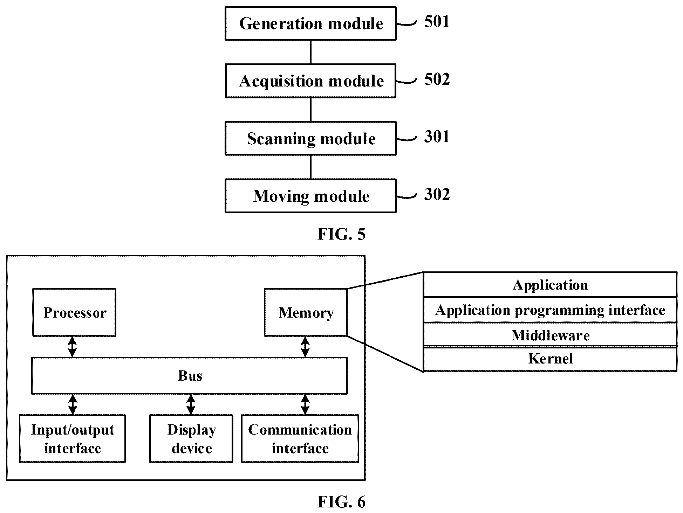

In a specific application scenario, as shown in FIG. 5, the apparatus further includes a generation module 501 and an acquisition module 502.

The generation module 501 is configured to: scan an operating environment by using a scanning sensor, generate an electronic map, and store the electronic map in a local memory or a remote server.

The acquisition module 502 is configured to: receive a task instruction and read the designated position to be reached as required in the task instruction; or plan a task list based on the task instruction and sequentially set positions associated with each of a plurality of subtasks in the task list as the designated position according to an execution order of the plurality of subtasks.

It should be noted that for other corresponding descriptions of various functional units related to the apparatus for enabling a device to move to a designated position according to the embodiments of the present application, reference may be made to the corresponding descriptions in FIGs. 1 and 2. Details are not described herein again.

In an exemplary embodiment, referring to FIG. 6, a device is further provided. The device includes a communication bus, a processor, a memory, and a communication interface, and may further include an input/output interface and a display device. The functional units may communicate with each other via a bus. The memory stores a computer program, and the processor is configured to run the program stored in the memory, to perform the method for enabling a device to move to a designated position according to the above embodiments.

A computer-readable storage medium has a computer program stored thereon. The computer program, when run by a processor, implements the steps of the method for enabling a device to move to a designated position.

In an embodiment, a computer program product is provided. The computer program product includes a computer program. The computer program, when run by a processor, implements the steps in the above method embodiments. Based on such an understanding, the technical solutions according to the present application may be embodied in the form of a software product. The software product may be stored in a non-volatile storage medium (which may be a CD-ROM, a USB flash drive, a portable hard drive, or the like), and includes several instructions to enable a computer device (which may be a personal computer, a server, a network device, or the like) to perform the method according to the implementation scenarios of the present application.

Those skilled in the art can understand that the drawings are merely schematic diagrams of a preferred implementation scenario, and the modules or procedures shown in the drawings are not necessarily required for implementing the present application.

Those skilled in the art can understand that the modules within the apparatus in the implementation scenario may be distributed in the apparatus in the implementation scenario based on the description of the implementation scenario, or may undergo corresponding changes to be located in one or more apparatuses different from that in the implementation scenario. The modules in the above implementation scenarios may be combined into one module or may be further divided into a plurality of submodules.

The serial numbers of the present application are merely for description and do not represent the advantages and disadvantages of the implementation scenarios.

The content disclosed above is merely several specific implementation scenarios according to the present application, but the present application is not limited thereto. Any variation that can be figured out by those skilled in the art shall fall within the protection scope of the present application.

## Claims

1. A method for enabling a device to move to a designated position, comprising:
scanning a target position to acquire a scanning result when it is detected that a designated position is in an unreachable state; and
continuing to move to the designated position if the scanning result indicates that the designated position is currently in a reachable state.

2. The method according to claim 1, wherein detecting that the designated position is in the unreachable state comprises: detecting that the designated position is in the unreachable state based on a historical map.

3. The method according to claim 2, wherein detecting that the designated position is in the unreachable state based on the historical map comprises:
determining a target path based on a current device position and the designated position, and identifying the historical map based on the target path; and
determining that the designated position is in the unreachable state when it is identified that a target environment is in a closed state.

4. The method according to claim 2, wherein scanning the target position to acquire the scanning result comprises: performing a preliminary scanning detection on the target position through actual detection, and generating a scanning result indicating that the designated position is currently in the reachable state if it is detected that the target position is traversable, wherein the reachable state is used to indicate that the target position is passable, or a path to reach the designated position can be generated after updating the historical map.

5. The method according to claim 2, wherein scanning the target position to acquire the scanning result comprises: performing a preliminary scanning detection on the target position through actual detection, and generating a scanning result indicating that the designated position is currently in the unreachable state if it is detected that the target position is non-traversable.

6. The method according to claim 5, wherein following the scanning result indicating that the designated position is currently in the unreachable state, the method further comprises: sending prompt information to a remote application terminal; and scanning the target position again in response to a resume movement instruction and acquiring a scanning result again.

7. The method according to claim 1, wherein scanning the target position to acquire the scanning result when it is detected that the designated position is in the unreachable state further comprises:
determining, through actual detection, that the designated position is in the unreachable state;
determining the target position in response to a resume movement instruction and scanning the target position; and
generating a scanning result indicating that the designated position is currently in the reachable state if it is detected that the target position is traversable; or
generating a scanning result indicating that the designated position is currently in the unreachable state if it is detected that the target position is non-traversable.

8. The method according to claim 7, wherein determining, through actual detection, that the designated position is in the unreachable state comprises:
scanning an operating environment associated with a current device position by using a scanning sensor; and
generating a preliminary scanning result indicating that the designated position is currently in the unreachable state when it is detected by scanning that the operating environment is in a closed state, and sending prompt information to a remote application terminal.

9. The method according to claim 1, wherein scanning the target position comprises:
scanning the target position by using a laser scanning sensor; and
determining that the target position is traversable if it is detected that there is no obstacle at the target position; or
acquiring a current obstacle point cloud of the target position if it is detected that there is an obstacle at the target position, and determining that the target position is traversable when a proportion of the obstacle point cloud within a unit space or area is less than a first preset threshold.

10. The method according to claim 1, wherein scanning the target position further comprises:
scanning the target position by using an obstacle perception sensor; and
determining that the target position is traversable if it is detected that there is no obstacle at the target position; or
acquiring a current obstacle height point cloud and obstacle position point cloud of the target position if it is detected that there is an obstacle at the target position, and determining that the target position is traversable when a proportion of the obstacle height point cloud and a proportion of the obstacle position point cloud within a unit space or area are less than a second preset threshold and a third preset threshold, respectively.

11. The method according to claim 1, wherein after acquiring the scanning result, the method further comprises:
continuing to send the prompt information to a remote application terminal or entering an explore mode if the scanning result indicates that the designated position is currently in the unreachable state.

12. The method according to claim 11, wherein entering the explore mode comprises:
moving to the target position;
rotating in a designated direction when a physical collision buffer is triggered, wherein the designated direction is a direction opposite a position at which the physical collision buffer is triggered;
moving in the designated direction until the target position is passed or there is no forward path; and
sending the prompt information to the remote application terminal if there is no forward path.

13. The method according to claim 1, wherein before scanning the target position when it is detected that the designated position is in the unreachable state, the method further comprises:
scanning an operating environment by using a scanning sensor, generating an electronic map, and storing the electronic map in a local memory or a remote server; and
receiving a task instruction and reading the designated position to be reached as required in the task instruction; or
planning a task list based on the task instruction, and sequentially setting positions associated with each of a plurality of subtasks in the task list as the designated position according to an execution order of the plurality of subtasks.

14. An apparatus for enabling a device to move to a designated position, comprising:
a scanning module, configured to scan a target position to acquire a scanning result when it is detected that a designated position is in an unreachable state; and
a moving module, configured to continue to move to the designated position if the scanning result indicates that the designated position is currently in a reachable state.

15. A computer device, comprising a memory and a processor, wherein the memory stores a computer program, and the processor, when running the computer program, is caused to implement steps of the method according to any one of claims 1 to 13.

16. A computer-readable storage medium storing a computer program, wherein the computer program, when run by a processor, causes the processor to implement steps of the method according to any one of claims 1 to 13.

17. A computer program product, comprising a computer program, wherein the computer program, when run by a processor, causes the processor to implement the following steps:
scanning a target position to acquire a scanning result when it is detected that a designated position is in an unreachable state; and
continuing to move to the designated position if the scanning result indicates that the designated position is currently in a reachable state.

18. The computer program product according to claim 17, wherein detecting that the designated position is in the unreachable state comprises: detecting that the designated position is in the unreachable state based on a historical map.

19. The computer program product according to claim 18, wherein detecting that the designated position is in the unreachable state based on the historical map comprises:
determining a target path based on a current device position and the designated position, and identifying the historical map based on the target path; and
determining that the designated position is in the unreachable state when it is identified that a target environment is in a closed state.

20. A self-mobile device, comprising a memory and a processor, wherein the memory stores a computer program, and the processor comprises an image capturing assembly, a communication unit, and an analysis transportation unit, wherein the image capturing assembly is configured to capture an image, the communication unit is configured to perform data transmission with a maintenance station and a terminal, and the analysis transportation unit is configured to perform image identification analysis; the processor, when running the computer program, is caused to implement steps of the method according to any one of claims 1 to 13.
